# EUROPÄISCHE PATENTANMELDUNG

(11) **EP 0 676 743 A2**
(43) Veröffentlichungstag der Anmeldung: **11.10.1995**
(21) Anmeldenummer: 95200522.1
(22) Anmeldetag: 03.03.1995
(51) Int. Cl.: G10L 3/00, G10L 5/06

(54) **Verfahren und Anordnung zum Ermitteln einer Folge von Wörtern aus einem Sprachsignal**

(30) Priorität: 09.03.1994 DE 4407833
(71) Anmelder: Philips Patentverwaltung GmbH, 22335 Hamburg (DE); Philips Electronics N.V., 5621 BA Eindhoven (NL)
(72) Erfinder: Tran, Bach-Hiep, D-20097 Hamburg (DE); Ney, Hermann, Dr., D-20097 Hamburg (DE); Steinbiss, Volker, Dr., D-20097 Hamburg (DE)
(74) Vertreter: Poddig, Dieter, Dipl.-Ing.

(57) **Zusammenfassung**

Bei der Erkennung eines Sprachsignals unter Verwendung eines umfangreichen Vokabulars werden während des Sprachsignals eine Anzahl Hypothesen aufgebaut, deren Anzahl immer wieder begrenzt wird, indem die Bewertungswerte der Hypothesen mit einem Schwellwert verglichen werden und ungünstige Hypothesen beendet werden. Dadurch wird der Rechenaufwand und auch der Speicherplatzbedarf begrenzt. Bei manchen Abschnitten eines Sprachsignals, der beispielsweise aus einer Sprachpause oder einem Räuspern besteht und dem kein Wort des Vokabulars zugeordnet werden kann, kann bei Verwendung eines festen Schwellwertes die Anzahl aktiver Hypothesen plötzlich sehr stark ansteigen, so daß für das ganze Verfahren ein unnötig großer Speicherraum bereit gehalten und die zugehörigen Bearbeitungsschritte durchgeführt werden muß. Erfindungsgemäß wird nun der Schwellwert dynamisch verändert, nämlich abhängig von der Anzahl aktiver Hypothesen, so daß deren Anzahl stets auf einen vorgegebenen Maximalwert begrenzt bleibt.

## Beschreibung

Die Erfindung betrifft ein Verfahren zum Ermitteln einer Folge von Wörtern eines vorgegebenen Vokabulars aus einem Sprachsignal mit folgenden Schritten:
zu wiederholten Zeitpunkten wird das Sprachsignal abgetastet, um eine Folge von Testsignalen zu erzeugen;
es wird ein signalweiser Vergleich zwischen den Testsignalen und verschiedenen Folgen von Referenzsignalen mit Erzeugung von Vergleichsdaten durchgeführt, wobei jede Folge von Referenzsignalen zu einem vorgegebenen Satz von Folgen von Referenzsignalen gehört und ein Wort des Vokabulars darstellt;
die Vergleichsdaten werden über verschiedene aufeinanderfolgende Folgen von Referenzsignalen getrennt zu Bewertungswerten aufsummiert;
die Bewertungswerte werden mit einem Schwellwert verglichen, und der Vergleich von Testsignalen mit jeder Folge von Referenzsignalen, bei der der zugehörige Bewertungswert den Schwellwert überschreitet, wird abgebrochen;
wenigstens eine Folge von Wörtern wird unter Verwendung des Bewertungswertes am Ende des Sprachsignals ausgegeben.

Ein derartiges Verfahren ist bekannt aus der DE 37 10 507 A1 (PHD 87-067) und wird vorteilhaft verwendet, wenn das Vokabular sehr umfangreich ist und die zu erkennenden Sprachsignale eine lange Folge von Wörtern umfassen. Jede Folge von Referenzsignalen, deren Vergleichsdaten aus dem Vergleich mit aufeinanderfolgenden Testsignalen aufsummiert wurden, wird auch als Hypothese bezeichnet. Dabei handelt es sich bei den Bewertungswerten um negative Logarithmen von Auftrittswahrscheinlichkeiten.

Für andere Bedeutungen der Bewertungswerte müssen entsprechend andere arithmetische Operationen durchgeführt werden. Wenn beim Verfolgen der einzelnen Hypothesen bei einem umfangreichen Vokabular kein Schwellwert verwendet würde, würde jedes Testsignal mit allen Referenzsignalen von allen Folgen verglichen werden, da praktisch bei jedem Testsignal mindestens ein Wortende auftritt und mit dem nächsten Testsignal dann wieder der Vergleich mit den ersten Referenzsignalen aller Folgen begonnen wird, d.h. neue Hypothesen gestartet werden. Dies erfordert nicht nur einen außerordentlich großen Speicher für die Vergleichsergebnisse, sondern auch sehr viel Rechenzeit. Beides wird also durch die Verwendung eines Schwellwertes, durch den die Gesamtzahl aktueller Vergleiche immer wieder beschränkt wird, begrenzt, und zwar um so mehr, je kleiner dieser Schwellwert ist. Bei der Verwendung eines zu kleinen Schwellwertes besteht jedoch die Gefahr, daß durch zufällig etwas undeutlich ausgesprochene Wörter die Hypothese mit der Folge von Referenzsignalen, die den tatsächlich gesprochenen Satz richtig wiedergibt, fälschlich beendet wird. Für den Schwellwert muß also ein Kompromiß zwischen Aufwand und Zuverlässigkeit der Auswertung geschlossen werden.

Die Anwendung eines Schwellwertes bewirkt, daß die Hypothesen, also die Vergleiche in Folgen von Referenzsignalen, die sehr unterschiedlich sind zu der momentanen Folge von Testsignalen, beendet werden. Es können jedoch auch Abschnitte im Sprachsignal auftreten, die zu keinem Wort des Vokabulars gut passen. Dies ist insbesondere der Fall bei kurzen Sprachpausen. Da mit jedem neuen Testsignal immer wieder erneut Vergleiche mit Folgen von Referenzsignalen begonnen werden, die getrennt von früher begonnenen Vergleichen verfolgt werden, werden sehr viele Hypothesen aufgebaut und die einzelnen Testsignale eines solchen Sprachabschnitts mit geringer Ähnlichkeit zu allen Wörtern des Vokabulars trotz Verwendung eines Schwellwertes mit Referenzsignalen einer sehr großen Anzahl von Folgen verglichen. Für eine ordnungsgemäße Durchführung des Verfahrens ist es erforderlich, daß für die Zwischenergebnisse aller aktiven Hypothsen ausreichend Speicherplatz zur Verfügung steht, der jedoch im Normalfall, d.h. bei einem Abschnitt des Sprachsignals, das wenigstens einem Wort des Vokabulars ähnlich ist, nicht benötigt wird. Der erforderliche Speicherplatz wird also nur sehr unwirtschaftlich ausgenutzt.

Aufgabe der Erfindung ist es, ein Verfahren der eingangs genannten Art anzugeben, bei dem der erforderliche Speicherplatzbedarf und der Verarbeitungsaufwand auch dann begrenzt bleibt, wenn ein Sprachabschnitt mit geringerer Ähnlichkeit zu allen Wörtern des Vokabulars auftritt. Diese Aufgabe wird erfindungsgemäß dadurch gelöst, daß der Schwellwert bei jedem neuen Testsignal derart gewählt wird, daß die Anzahl der aktiven Folgen von Referenzsignalen, mit denen nicht abgebrochene Vergleiche mit diesem neuen Testsignal durchgeführt werden, einen vorgegebenen Höchstwert nicht überschreitet.

Im Gegensatz zu bisher bekannten Verfahren, bei denen ein konstanter Schwellwert, d.h. ein Schwellwert mit einer konstanten festen Beziehung zum besten Bewertungswert beim momentanen Testsignal verwendet wird, wird nunmehr der Schwellwert variabel gebildet, nämlich in Abhängigkeit von der Anzahl Hypothesen bzw. der Anzahl Folgen von Referenzsignalen, mit denen momentan nicht abgebrochene Vergleiche durchgeführt werden. Wenn ein Sprachsignalabschnitt auftritt, der annähernd gleichermaßen unähnlich zu allen Wörtern des Vokabulars ist, wird dieser Schwellwert so niedrig gewählt, daß in diesem Falle Vergleiche mit nur einer begrenzten Anzahl von Folgen von Referenzsignalen durchgeführt werden und somit der dafür erforderliche Speicherplatz vorgegebene Grenzen nicht überschreitet. Der Speicherplatz braucht dann also nur so groß zu sein, wie es im Normalfall bei einer Folge von Testsignalen, die aus einem undeutlich gesprochenen Wort gewonnen wurde, erforderlich ist. Die Möglichkeit, daß durch einen zu kleinen Schwellwert beispielsweise während einer Sprachpause die Folge richtige der ermittelten Wörter fälschlich beendet wird, ist in einem solchen Sprachabschnitt nicht größer als während des übrigen Sprachsignals.

Die Bildung des Schwellwertes in Abhängigkeit der Anzahl aktiver Folgen von Referenzsignalen, in denen Vergleiche durchgeführt werden, kann auf verschiedene Weise erfolgen. Eine Möglichkeit wäre es, alle aktiven Folgen nach der Größe ihres momentanen Bewertungswertes zu ordnen und zu zählen, bei welchem Bewertungswert eine vorgegebene Anzahl von aktiven Folgen erreicht wird. Dieser Bewertungswert gibt dann den Schwellwert an. Dies erfordert jedoch einen merklichen Aufwand. Eine andere Möglichkeit besteht nach einer Ausgestaltung der Erfindung darin, daß wenigstens bei Überschreiten eines zweiten, kleineren Höchstwertes durch die Anzahl aktiver Folgen von Referenzsignalen bei einem bestimmten Testsignal ein Histogramm der Bewertungswerte aller aktiven Folgen von Referenzsignalen gebildet wird und daß aus diesem Histogramm ein Hilfswert für die Bestimmung des Schwellwertes bei dem nächstfolgenden Testsignal abgeleitet wird. Ein solches Histogramm kann mit wenig Aufwand parallel zu der Durchführung der Vergleiche und der weiteren notwendigen Maßnahmen bei den einzelnen Folgen von Referenzsignalen gebildet werden. Das Ergebnis ist dann das gleiche wie bei einem Ordnen der Folgen nach der Größe der Bewertungswerte, es erfordert jedoch weniger Aufwand.

Eine andere Ausgestaltung der Erfindung, die insbesondere zweckmäßig ist, wenn der Schwellwert dadurch gebildet wird, daß zu dem minimalen Bewertungswert bei einem Testsignal ein Bereichswert addiert wird, ist nach einer weiteren Ausgestaltung der Erfindung dadurch gekennzeichnet, daß der Bereichswert entsprechend der Anzahl aktiver Folgen von Referenzsignalen verringert bzw. vergrößert wird. Dies erfordert besonders wenig Aufwand, da lediglich diese Anzahl von aktiven Folgen bestimmt werden muß. Wenn diese Anzahl gering ist, wird der Bereichswert mit jedem neuen Testsignal vergrößert, wodurch die Anzahl aktiver Folgen automatisch wächst. Beim Überschreiten eines bestimmten Wertes durch die Anzahl wird der Bereichswert dagegen verringert, und zwar um so stärker, je mehr die Anzahl aktiver Folgen diesen bestimmten Wert überschreitet. Dadurch erfolgt quasi eine Regelung der Anzahl aktiver Folgen bzw. Hypothesen bei den aufeinanderfolgenden Testsignalen.

Die Erfindung betrifft ferner eine Anordnung zur Durchführung des erfindungsgemäßen Verfahrens mit Mitteln zum Aufnehmen eines akustischen Sprachsignals und zum Erzeugen einer Folge von elektrischen Testsignalen daraus,
Mitteln zum Speichern von Folgen von Referenzsignalen, die Wörtern entsprechen,
ersten Mitteln zum Vergleichen der Folge von Testsignalen mit Folgen von Referenzsignalen und zum Erzeugen von Vergleichsdaten und von Bewertungswerten aus akkumulierten Vergleichsdaten,
zweiten Mitteln zum Vergleichen der Bewertungswerte mit wenigstens einem Schwellwert und zum Steuern der ersten Mittel zum Vergleichen,
Mitteln, die von den ersten Mitteln zum Vergleichen gesteuert sind, zum Ausgeben einer Folge von Wörtern. Eine derartige Anordnung ist ebenfalls aus der eingangs genannten Druckschrift bekannt. Diese bekannte Anordnung wird erfindungsgemäß dadurch ausgestaltet, daß die zweiten Mittel weitere Mittel enthalten zum Beeinflussen des Schwellwertes in Abhängigkeit von der Anzahl der Referenzsignale, mit denen in den ersten Mitteln zum Vergleichen beim letzten Testsignal Vergleiche durchgeführt wurden.

Ausführungsbeispiele der Erfindung werden nachstehend anhand der Zeichnung näher erläutert. Es zeigen:
Fig. 1 ein Blockschaltbild einer erfindungsgemaßen Anordnung,
Fig. 2 ein Diagramm zur Erläuterung der Entstehung und Beendigung von Folgen von Referenzsignalen,
Fig. 3 ein Diagramm mit dem Verlauf der Anzahl der aktiven Folgen von Referenzsignalen über ein beispielsweise angenommenes Sprachsignal,
Fig. 4 ein beispielweise angenommenes akkumuliertes Histogramm über die Bewertungswerte bei einem Testsignal.

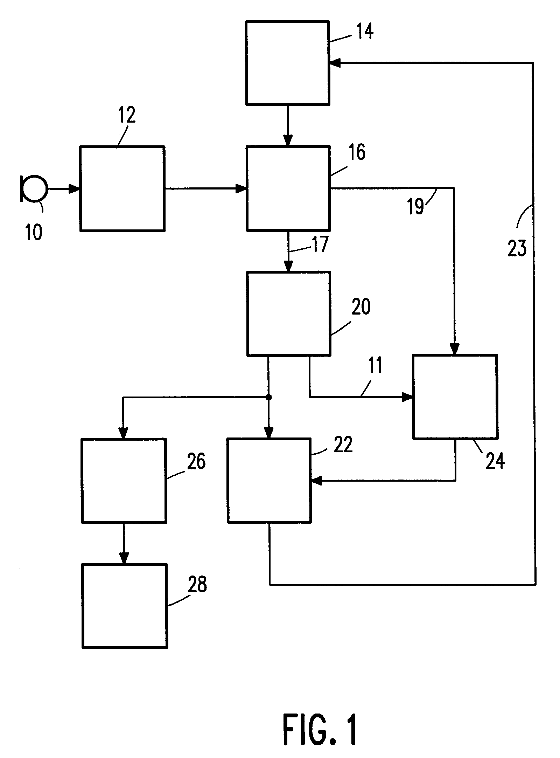

Bei der in Fig. 1 dargestellten Anordnung wird ein akustisches Signal von einem Mikrofon 10 aufgenommen und in ein elektrisches Signal umgewandelt und in dem Block 12 vorzugsweise zu regelmäßigen Zeitpunkten abgetastet und in eine Folge von Testsignalen umgesetzt. Jedes Testsignal charakterisiert einen Zeitabschnitt des Sprachsignals, beispielsweise einen Abschnitt von 10 ms Dauer über eine Vielzahl von Parametern, und im Block 16 werden diese Testsignale mit Referenzsignalen aus einem Speicher 14 verglichen und Vergleichswerte bestimmt. Dieser Vergleich erfolgt üblicherweise nach der Methode der dynamischen Programmierung. In dem Speicher 14 sind die Referenzsignale als Folgen enthalten, wobei jeweils eine Folge wenigstens einem Wort des Vokabulars entspricht. Wenn die Referenzsignale des Vokabulars als Baum aufgebaut sind, sind Teile der Folgen für mehrere Worte gemeinsam.

Beim Vergleich nach der Methode der dynamischen Programmierung werden die einzelnen Vergleichswerte, von denen jeder aus einem Vergleich des momentanen Testsignals mit einem Referenzsignal stammt, über jede Folge von Referenzsignalen getrennt aufsummiert zu einem Bewertungswert dieser Folge. Die Bewertungswerte für jede aktive Folge von Referenzsignalen werden zusammen mit einem Hinweis auf den Anfangspunkt dieser Folge am Ausgang 17 abgegeben und in einen Speicher 20 eingeschrieben. Der Hinweis auf den Anfangspunkt der Folge wird beispielsweise als Nummer desjenigen Testsignals ausgedrückt, bei dem die Folge begonnen wurde.

Wenn ein Testsignal mit den betreffenden Referenzsignalen aller aktiven Folgen verglichen worden ist, werden von den im Speicher 20 gespeicherten Ergebnisse die Bewertungswerte mit einem Schwellwert verglichen. Dies erfolgt im Block 22, der einen Schwellwert von einem Block 24 zugeführt erhält. Nur wenn der Bewertungswert einer aktiven Folge unterhalb des Schwellwerts liegt, werden über die Verbindung 23 die in dieser aktiven Folge von Referenzsignalen folgenden Referenzsignale aus dem Speicher 14 ausgelesen und der Vergleichsanordnung 16 zum Vergleich mit dem nächsten Testsignal zugeführt. Bei allen noch aktiven Folgen von Referenzsignalen, bei denen der Bewertungswert den Schwellwert überschreitet, werden keine folgenden Referenzwerte aus dem Speicher 14 ausgelesen, so daß die Vergleiche mit solchen Folgen automatisch gebrochen werden.

Immer dann, wenn ein Wortende erreicht worden ist, d.h. wenn das letzte Referenzsignal einer Folge mit einem Testsignal verglichen wird, wird außerdem ein Wortergebnis gebildet, das den Bewertungswert der beendeten Folge umfaßt sowie ferner einen Hinweis auf das beendete Wort, das dieser Folge zugeordnet ist. Dieser Hinweis kann beispielsweise eine Nummer dieses Wortes innerhalb einer Vokabularliste darstellen. Ferner wird ein Hinweis auf den Anfangs- und Endpunkt der beendeten Folge abgegeben, wobei diese Punkte beispielsweise als Nummern des Testsignals ausgedrückt werden können, bei dem diese Folge von Referenzsignalen begonnen wurde und bei dem diese Folge beendet wurde, wobei der erste Punkt ebenfalls aus dem Speicher 20 entnommen wird und der zweite Punkt die Nummer des aktuellen Testsignals ist. Die Ausgabe der Wortergebnisse erfolgt über den Ausgang 21, und die Wortergebnisse werden in einem Speicher 26 gespeichert. Am Ende des Sprachsignals wird dann aus den Wortergebnissen im Speicher 26 die Folge von Wörtern, die beispielsweise den besten Bewertungswert hat, zurückverfolgt und über eine Ausgabeanordnung 28, beispielsweise einen Bildschirm oder einen Drucker, ausgegeben.

Da die Bewertungswerte aller aktiven Folgen von Referenzsignalen, die im Speicher 20 gespeichert sind, mit fortschreitendem Sprachsignal immer weiter ansteigen, kann der im Block 24 erzeugte Schwellwert nicht konstant bleiben. Der Schwellwert wird daher auf den günstigsten aller im Speicher 20 gespeicherten Bewertungswerte bezogen, nämlich indem dieser günstigste Bewertungswert um einen Betragswert erhöht wird, um den Schwellwert zu bilden. Dieser Betragswert ist nun nicht konstant, sondern wird abhängig von der Anzahl der aktiven Folgen, mit denen beim momentanen Testsignal im Vergleicher 16 Vergleiche durchgeführt wurden, bestimmt. Diese Anzahl wird dem Block 24 zur Erzeugung des Schwellwertes bzw. des Bereichswertes über die Verbindung 19 von der Vergleichsanordnung 16 zugeführt. Der Bereichswert kann aus dieser Anzahl beispielsweise dadurch gebildet werden, daß er abhängig von dieser Anzahl vergrößer bzw. verkleinert wird, nämlich wenn die Anzahl aktiver Folgen stark wächst bzw. groß ist, wird der Bereichswert verkleinert, und wenn die Anzahl klein ist bzw. sinkt, wird der Bereichswert vergrößert. Ein derartiges Verfahren ist grundsätzlich aus der Regelungstechik bekannt. Allerdings ist es damit schwierig, die Anzahl aktiver Vergleiche auf einen maximalen Wert zu begrenzen, so daß die Abhängigkeit, mit der der Bereichswert durch die Anzahl aktiver Folgen verändert wird, sehr restriktiv gewählt werden muß. Eine andere Möglichkeit, die eine maximale Anzahl aktiver Folgen zuverlässiger einhält, wird später erläutert.

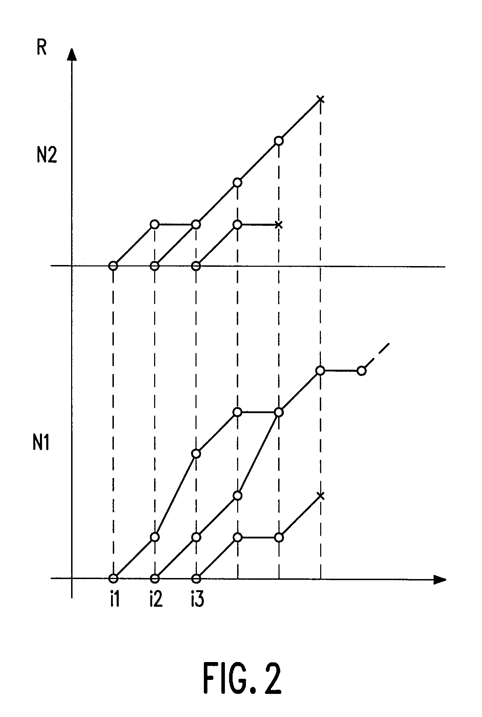

In Fig. 2 ist ein kleiner Ausschnitt aus dem Ablauf bei der Durchführung der Vergleiche von Testsignalen mit Folgen von Referenzsignalen angedeutet. Dabei sind nur beispielhaft zwei Folgen N1 und N2 von Referenzsignalen R betrachtet, die über die y-Achse aufgetragen sind, während die Folge von Testsignalen i über die x-Achse angegeben ist. Hierbei ist angenommen, daß für jedes Wort des Vokabulars eine eigene Folge von Referenzsignalen gespeichert ist. Für den Fall, daß die Folgen von Referenzsignalen der Wörter des Vokabulars als ein Baum angeordnet sind, ergeben sich ähnliche Verhältnisse.

Es werden hier beispielhaft nur drei aufeinanderfolgende Testsignale i1, i2 und i3 betrachtet. Ferner wird angenommen, daß unmittelbar vor jedem dieser drei Testsignale wenigstens ein Wort, d.h. der Vergleich mit wenigstens einer Folge von Referenzsignalen geendet hat, was bei einem großen Vokabular durchaus realistisch ist. Mit jedem der Testsignale i1, i2 und i3 beginnt der Vergleich mit Folgen von Referenzsignalen erneut, nämlich der Vergleich mit dem ersten Referenzsignal jeder dieser Folgen, und zwar ausgehend mit einem Bewertungswert, der von dem Bewertungswert bei dem vorhergehend beendeten Wort bzw. von dem besten Bewertungswert bei mehreren gleichzeitig beendeten Wörtern ausgeht. Die Linien verbinden die Referenzsignale der einzelnen Folgen von Referenzsinale, mit denen das Testsignal die beste Übereinstimmung zeigt, wobei diese Übereinstimmung in verschiedenen Folgen selbstverständlich sehr unterschiedliche Werte hat. Die Folgen der Vergleiche, die die besten Übereinstimmungen zeigen, werden nach der Methode der dynamischen Programmierung gewonnen.

Für die Folge N1 von Referenzsignalen verlaufen die Folgen von Vergleichen, die mit den aufeinanderfolgenden Testsignalen i1, i2 und i3 beginnen, zunächst etwa parallel zueinander im Diagramm. Derartige Folgen von Vergleichen werden auch als Hypothesen bezeichnet. Die ersten beiden Hypothesen für die Folge N1 vereinigen sich nach einer Anzahl von Testsignalen bei einem Referenzsignal, und nur die Hypothese mit dem besseren Bewertungswert wird dann weitergeführt. Die beim Testsignal i3 beginnende Folge von Vergleichen verläuft getrennt bis zu einer mit einem Kreuz markierten Stelle, was in diesem Beispiel bedeutet, daß diese Folge von Vergleichen an der markierten Stelle einen Bewertungswert erreicht, der den Schwellwert bei dem betreffenden Testsignal überschreitet. Diese Folge von Vergleichen wird hier also abgebrochen.

Für die Folge N2 von Referenzsignalen vereinigen sich die beiden Folgen von Vergleichen, die mit den Testsignalen i1 und i2 beginnen, bereits beim Testsignal i3, und die Folge mit dem besseren Bewertungswert verläuft dann noch einige Testsignale weiter, bis sie schließlich an dem mit dem Kreuz bezeichneten Punkt endet, weil dort der Bewertungswert der Folge den bei dem betreffenden Testsignal gültigen Schwellwert überschreitet. Die mit dem Testsignal i3 beginnende Folge von Vergleichen in der Folge N2 von Referenzsignalen endet sogar noch früher an der mit dem Kreuz markierten Stelle, so daß in der Folge N2 von Referenzsignalen alle Folgen von Vergleichen, d.h. alle Hypothesen zunächst beendet sind. Tatsächlich beginnen natürlich auch bei den auf das Testsignal i3 folgenden Testsignalen immer wieder Folgen von Vergleichen, die hier der Übersichtlichkeit halber nicht dargestellt sind.

Das dargestellte Beispiel zeigt, daß die Folge N1 zu einem Wort gehört, das mit dem Sprachsignal, beginnend etwa zwischen den Zeitpunkten i1 und i2, eine gute Ähnlichkeit hat bzw. sogar damit übereinstimmt, während das zur Folge N2 gehörende Wort sehr unähnlich ist. Im praktischen Fall werden selbstverständlich Vergleiche mit sehr vielen weiteren Folgen von Referenzsignalen begonnen, von denen viele durch den Vergleich mit dem Schwellwert abgebrochen werden, jedoch sind bei jedem Testsignal stets eine große Anzahl von Folgen von Vergleichen bzw. von Hypothesen aktiv.

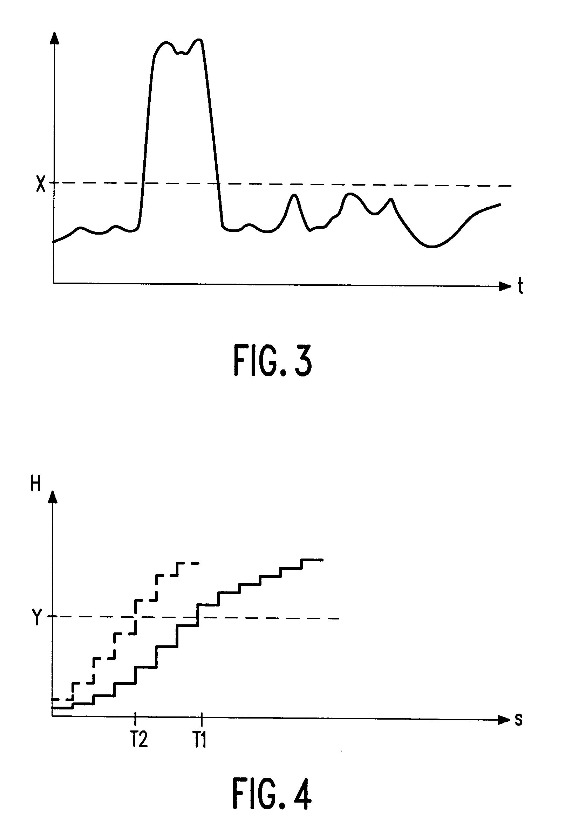

In Fig. 3 ist ein Beispiel für die Anzahl der Hypothesen, die während eines längeren Sprachsignals aktiv sind, dargestellt. Zu Beginn des Sprachsignals ist nur eine relativ geringe Anzahl von Hypothesen aktiv, nämlich nur Hypothesen mit Wörtern, die dem Sprachsignal einigermaßen ähnlich sind. Diese Anzahl wächst plötzlich sehr stark an, beispielsweise infolge einer Sprachpause oder eines anderen Geräusches wie z.B. Räuspern, das mit keinem der Wörter des Vokabulars wesentliche Ähnlichkeit besitzt. Dadurch ergeben die Vergleiche der Testsignale aus einem solchen Abschnitt mit allen Referenzsignalen annähernd gleich ungünstige Vergleichsdaten, so daß die Bewertungswerte aller aktiven und neu begonnenen Hypothesen schnell wachsen, jedoch alle annähernd gleichmäßig, so daß durch Vergleich mit einem Schwellwert, der einen konstanten Abstand zum besten Bewertungswert bei den einzelnen Testsignalen hat, die meisten Hypothesen aktiv bleiben. Bei der praktischen Durchführung der Spracherkennung muß jedoch für jede Hypothese ein ausreichender Speicherplatz vorhanden sein, so daß der gesamte erforderliche Speicherplatz sehr groß ist, lediglich um Sprachsignalabschnitte zu verarbeiten, die kaum relevant für die zu ermittelnde Wortfolge sind. Eine Beschränkung der maximalen Anzahl von aktiven Hypothesen auf den gestrichelt angegebenen Wert X, der während des übrigen Teils des Sprachsignals mit erkennbaren Wörtern nicht überschritten wird, vermeidet also, daß unnötig viel Speicherplatz zur Verfügung bereit gehalten werden muß. Diese Begrenzung muß aber derart erfolgen, daß diejenigen Hypothesen, deren zugehörige Wortfolgen insgesamt am ähnlichsten dem tatsächlich gesprochenen Sprachsignal sind, erhalten bleiben. Dies geschieht dadurch, daß der Schwellwert, insbesondere der Bereichswert zwischen dem besten Bewertungswert bei einem Testsignal und dem absoluten Schwellwert, entsprechend der Anzahl aktiver Hypothesen verändert wird.

Eine aus der Regelungstechnik bekannte Möglichkeit ist bereits früher erwähnt worden. Eine andere Möglichkeit, die eine noch zuverlässigere Begrenzung der maximalen Anzahl aktiver Hypothesen ermöglicht, soll anhand der Fig. 4 erläutert werden. Diese zeigt die akkumulierten Anzahlen H aus dem Histogramm der Bewertungswerte S bei einem Testsignal. Dabei sind immer eine Anzahl benachbarter Bewertungswerte zu einem gemeinsamen Bereich zusammengefaßt, so daß die Fig. 4 eine Treppenkurve zeigt, wobei die Höhe der einzelnen Stufen das Histogramm der Bewertungswerte ergibt. Die ausgezogene Linie deutet die Verhältnisse bei einem normalen Sprachsignal an, während die gestrichelte Kurve zu einem Sprachabschnitt gehört, der wie erwähnt keine Ähnlichkeit mit einem Wort des Vokabulars hat.

Der Schwellwert wird nun abhängig davon gewählt, bei welchem Bewertungswert S eine vorgegebene Anzahl Y überschritten wird. Dieser Wert Y muß kleiner gewählt werden als die maximale Anzahl X von Speicherplätzen für die einzelnen aktiven Hypothesen, da mit jedem neuen Testsignal eine Erweiterung der Anzahl Hypothesen erfolgt, indem Vergleiche mit Anfängen von Folgen von Referenzsignalen neu begonnen werden. Wenn das Vokabular, d.h. die Folgen von Referenzsignalen, die den einzelnen Wörtern zugeordnet sind, als Baum aufgebaut sind, ist dieser Anstieg der Anzahl aktiver Hypothesen begrenzt.

In Fig. 4 wird bei einem normalen Sprachsignal, das erkennbare Wörter enthält, der Wert Y durch die ausgezogene Stufenlinie bei dem Wert T1 überschritten, so daß dieser Wert T1 als Schwellwert verwendet wird, mit dem die Bewertungswerte beim nächsten Testsignal verglichen werden. Die gestrichelt dargestellte Stufenlinie, die zu einem Sprachsignal ohne erkennbare Wörter gehört, wird dagegen bereits bei dem Wert T2 überschritten, so daß dieser Wert T2 als Schwellwert für den Vergleich mit den Bewertungswerten beim nächsten Testsignal verwendet wird. Dieser Wert T2 ist wesentlich kleiner als der Wert T1, und dadurch wird erreicht, daß auch in diesem Falle die Anzahl aktiver Hypothesen bei den nächsten Testsignalen stets begrenzt und insbesondere wesentlich kleiner bleibt als Verwendung eines fensten Schwellwerts bei vergleichbarer Fehlerrate.

## Patentansprüche

1. Verfahren zum Ermitteln einer Folge von Wörtern eines vorgegebenen Vokabulars aus einem Sprachsignal mit folgenden Schritten:
zu wiederholten Zeitpunkten wird das Sprachsignal abgetastet, um eine Folge von Testsignalen zu erzeugen;
es wird ein signalweiser Vergleich zwischen den Testsignalen und verschiedenen Folgen von Referenzsignalen mit Erzeugung von Vergleichsdaten durchgeführt, wobei jede Folge von Referenzsignalen zu einem vorgegebenen Satz von Folgen von Referenzsignalen gehört und ein Wort des Vokabulars darstellt;
die Vergleichsdaten werden über verschiedene aufeinander-folgende Folgen von Referenzsignalen getrennt zu Bewertungswerten aufsummiert;
die Bewertungswerte werden mit einem Schwellwert verglichen, und der Vergleich von Testsignalen mit jeder Folge von Referenzsignalen, bei der der zugehörige Bewertungswert den Schwellwert überschreitet, wird abgebrochen;
wenigstens eine Folge von Wörtern wird unter Verwendung des Bewertungswertes am Ende des Sprachsignals ausgegeben, dadurch gekennzeichnet, daß der Schwellwert bei jedem neuen Testsignal derart gewählt wird, daß die Anzahl der aktiven Folgen von Referenzsignalen, mit denen nicht abgebrochene Vergleiche mit diesem neuen Testsignal durchgeführt werden, einen vorgegebenen Höchstwert nicht überschreitet.

2. Verfahren nach Anspruch 1,
dadurch gekennzeichnet, daß wenigstens bei Überschreiten eines zweiten, kleineren Höchstwertes durch die Anzahl aktiver Folgen von Referenzsignalen bei einem bestimmten Testsignal ein Histogramm der Bewertungswerte aller aktiven Referenzsignale gebildet wird und daß aus diesem Histogramm ein Hilfswert für die Bestimmung des Schwellwertes bei dem nächstfolgenden Testsignal abgeleitet wird.

3. Verfahren nach einem der Ansprüche 1 oder 2, wobei der Schwellenwert dadurch gebildet wird, daß zu dem minimalen Bewertungswert bei einem Testsignal ein Bereichswert addiert wird,
dadurch gekennzeichnet, daß der Bereichswert entsprechend der Anzahl aktiver Folgen von Referenzsignalen verringert bzw. vergrößert wird.

4. Anordnung zum Durchführen des Verfahrens nach einem der vorhergehenden Ansprüche, mit
Mitteln zum Aufnehmen eines akustischen Sprachsignals und zum Erzeugen einer Folge von elektrischen Testsignalen daraus,
Mitteln zum Speichern von Folgen von Referenzsignalen, die Wörtern entsprechen,
ersten Mitteln zum Vergleichen der Folge von Testsignalen mit Folgen von Referenzsignalen und zum Erzeugen von Vergleichsdaten und von Bewertungswerten aus akkumulierten Vergleichsdaten,
zweiten Mitteln zum Vergleichen der Bewertungswerte mit wenigstens einem Schwellwert und zum Steuern der ersten Mittel zum Vergleichen,
Mitteln, die von den ersten Mitteln zum Vergleichen gesteuert sind, zum Ausgeben einer Folge von Wörtern, dadurch gekennzeichnet, daß die zweiten Mittel weitere Mittel enthalten zum Beeinflussen des Schwellwertes in Abhängigkeit von der Anzahl der Referenzsignale, mit denen in den ersten Mitteln zum Vergleichen beim letzten Testsignal Vergleiche durchgeführt wurden.
